**Europäisches Patentamt**

**European Patent Office**

**Office européen des brevets**

(11) Publication number : **0 466 153 B1**

# EUROPEAN PATENT SPECIFICATION

(45) Date of publication of patent specification :
28.09.94 Bulletin 94/39

(51) Int. Cl.<sup>5</sup> : **H02K 1/17**

(21) Application number : **91111560.8**

(22) Date of filing : **11.07.91**

(54) Miniature electric motor.

(30) Priority : **13.07.90 JP 186534/90**

(43) Date of publication of application :
**15.01.92 Bulletin 92/03**

(45) Publication of the grant of the patent :
**28.09.94 Bulletin 94/39**

(84) Designated Contracting States :
**DE GB**

(56) References cited :
**DE-A- 1 538 731**
**GB-A- 2 193 385**
**PATENT ABSTRACTS OF JAPAN vol. 12, no.**
**211 (E-622)(3085) 16 June 1988 & JP-A-63 7 158**
**(MABUCHI MOTOR CO. LTD.) 13 January 1988**

(72) Inventor : **Nojima, Yukako**
**204 Detomuwan Momoyama-goryo,**
**218 Kyomachi 2-chome**
**Fushimi-ku, Kyoto City, 612 (JP)**
Inventor : **Uda, Shigenori**
**36-7, Hannancho 1-chome,**
**Abeno-ku**
**Osaka City, 545 (JP)**
Inventor : **Suyama, Hiromi**
**218, Oaza-Aga,**
**Saihaku-cho**
**Saihaku-gun, Tottori Pref., 683-02 (JP)**
Inventor : **Onda, Masanori**
**1138, Nagae**
**Yonago City, 683 (JP)**

(74) Representative : **Dr. Elisabeth Jung Dr. Jürgen**
**Schirdewahn Dipl.-Ing. Claus Gernhardt**
**Postfach 40 14 68**
**D-80714 München (DE)**

(73) Proprietor : **MATSUSHITA ELECTRIC**
**INDUSTRIAL CO., LTD.**
**1006, Oaza Kadoma**
**Kadoma-shi, Osaka-fu, 571 (JP)**

## Description

## FIELD OF THE INVENTION AND RELATED ART STATEMENT

## 1.FIELD OF THE INVENTION

The present invention relates to a miniature electric motor (fractional horse-power motor or fractional wattage motor), whose stator is comprised of rubber magnet, for use in driving, for example, a sound or video tape recorder.

## 2. DESCRIPTION OF THE RELATED ART

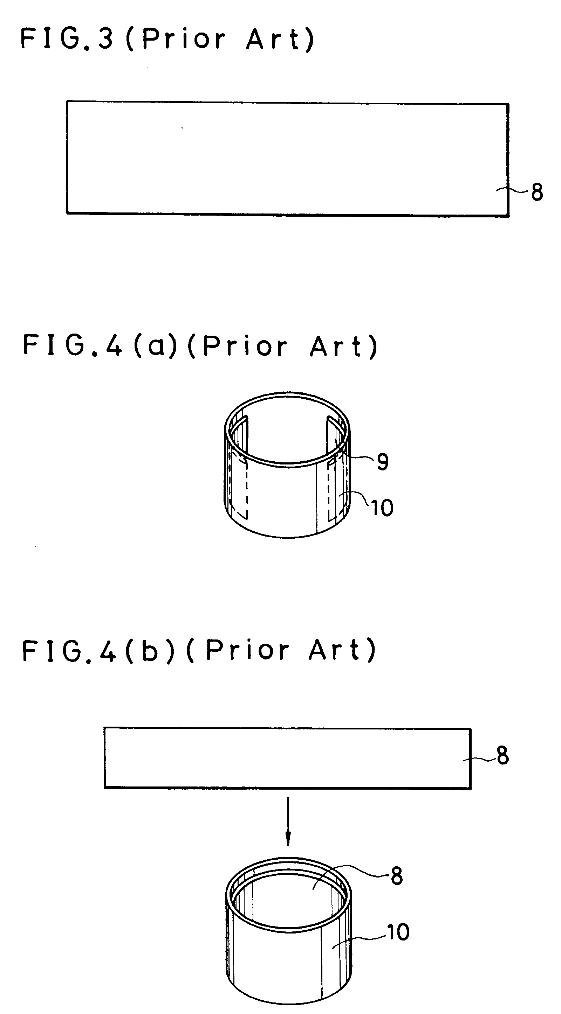

FIG. 4 schematically illustrates exemplified manners of assembling stators of a conventional miniature electric motor used generally for driving a tape of, for instance, a sound or video tape recorder. As indicated by FIG. 4 (a), one of the stators is structured by arranging two pole pieces 9 made of rubber magnet, each having a section of C-configuration, along an inner circumference of a motor housing 10, in the case of two pole motor. Alternatively, the stator of another example of FIG.4(b) is structured by rounding a rectangular strip 8 of rubber magnet to conform to the curvature of the inner circumference of the motor housing 10 to be accommodated therein and then polarising the strip under predetermined conditions. An example of such a miniature electric motor is disclosed in document GB-A-2193385

Of the above-mentioned arrangements, the latter conventional example of FIG.4(b) is more frequently and widely employed than the former one of FIG.4(a), because of the easiness in the assembling process and of the superiority in the manufacturing cost, except for the case that the whole motor configuration is restricted to be ellipsoid or the like.

The stator structured with the pole pieces (9) made of rubber magnet with sections of C-configuration rubber (FIG.4(a)) of the conventional example is advantageous in that it consumes only small amount of rubber magnet. It however has drawbacks that it entails an assembling process with complex means which might sometimes take long time for adhering and fixing the magnet pieces on the inner circumference of the motor housing and that it might have a high rejects ratio due to possible rip-off of the once fixed rubber magnet pieces.

The rectangular rubber magnet strip (FIG.4(b)) has an advantage that it can easily be held in the motor housing and can be assembled with the housing in a short time period, because it is made closely into contact with the entire inner circumference of the housing. The rectangular rubber magnet strip however has a drawback that the housing must hold a rounded long strip including non-polarised parts which might occupy spaces which could otherwise be spared. Another disadvantage is derived from the hardness or brittleness inherent to the rubber magnet material which might sometimes adversely affect the characteristics of the motor itself. The joining edges of the rectangular strip might sometimes be lifted slightly from the inner circumference of the housing, which will be rejected by the strict standard applied in the manufacturing control of such miniature motors, for instance, of uneven gap or clearance between the stator and the rotor.

In addition to this, the polarising process itself has also been imposing an unsolved problem on the designing of the shape of a polarising yoke, which would require long time period in experiments and in evaluating the experimental results, because the shape of the polarising yoke has a serious influence on the maximum torque and the cogging characteristics of the finished motor.

Apart from this, necessity for reducing a cogging characteristics of such a miniature motor had been recognized and some improvements therefor have recently been developed and disclosed in technical papers. One of such improvements may comprise, for instance, a provision of comb teeth on salient poles of an armature core which forms a rotor.

In actual practice, the comb teeth processing on the salient poles of the armature core of the rotor has hitherto been and is now being performed by die punching or etching on thin leaves to form the core, so that the comb teeth could demonstrate the effect of reducing the cogging characteristics as far as possible.

The next step of laminating the thin leaves however presents another problem in mass-producibility for a core of a miniature motor intended to realize a so-called "light-weight, thin, short and miniature size" structure. Thus, it is realized that any means other than providing the comb teeth on the rotor would be more preferable for effectively improving the cogging characteristics.

Moreover, the stator of the rectangular rubber magnet strip, which gives the easiness to the assembling process, has another drawback that the non-polarised regions actually occupy about one second (1/2) of the strip's entire length, being redundant as well as dispensable for expecting the desired motor characteristics.

## OBJECT AND SUMMARY OF THE INVENTION

It is therefore the primary object of the present invention is to provide a miniature electric motor whose stator is structured of rubber magnet which has overcome the above-mentioned various drawbacks and solved the problems inherent to the conventional ones.

According to the present invention, there is provided a miniature electric motor whose stator is structured with a strip made of rubber magnet, said strip comprises polarised regions and non-polarised regions, and characterized in that said strip has varying width, width of said polarised regions being larger than that of non-polarised regions. More particularly, the width of said non-polarised regions are gradually tapered (continuously and/or stepwise) from said polarised region towards parts of non-polarised regions with minimum width.

In the above-mentioned miniature electric motor, said polarised regions of said strip of rubber magnet may further include a plurality of discrete narrowed width zones and said non-polarised regions may include a plurality of discrete widened width zones. Said narrowed width zones may be indents provided along the periphery of the polarised regions while said widened width zones may be protrusions provided along the periphery of the non-polarised regions.

Since the width of the strip made of rubber magnet continuously varies with its lengthwise position between its polarised regions and its non-polarised regions, its magnetic flux density also varies continuously along its lengthwise position. Thus, the planar configuration of the strip may be determined so that its non-polarised regions have the minimum width for saving material and for facilitating the inserting operation.

As previously described, the miniature electric motor comprising a stator incorporating the strip is advantageous in its easy assembling process, in its simple polarising process, in its reduced cogging characteristics, in its space-saving size, in its effective utilization of rubber magnet and in its light weight of the finished motor.

Furthermore, the rubber magnet strip has an improved flexibility as compared with the rectangular strip of the prior art miniature motor because of its narrow width of the non-polarised regions. Thus the possible lifting of the strip at the joining edges when the strip is rounded is effectively prevented, and the gap or clearance between the rotor and the stator is maintained stable and uniform, thereby improving the reliability in the motor characteristics.

While the novel features of the present invention are set forth particularly in the appended claims, the invention, both as to organization and content, will be better understood and appreciated, along with other objects and features thereof, from the following detailed description taken in conjunction with the drawings.

## BRIEF DESCRIPTION OF THE DRAWINGS

FIG.1(a) is a developed view of an examples of a strip of rubber magnet to be used in an electric motor built in accordance with the present invention.

FIG.1(b) is a perspective view showing a manner of incorporating the rubber magnet strip of FIG.1(a) in a motor housing.

FIG.2(a) is a developed view of another examples of the rubber magnet strip.

FIG.2(b) is a plan view showing an arrangement for efficient cutting out of a number of the strips.

FIG.3 is the schematic view of a conventional rectangular strip made of the rubber magnet.

FIG.4(a) and FIG.4(b) are schematic views illustrating the conventional modes of fixing the rubber magnet to the motor housing.

## DESCRIPTION OF THE PREFERRED EMBODIMENTS

In the following paragraphs, the present invention will be described in more detail by way of examples shown in the attached drawings.

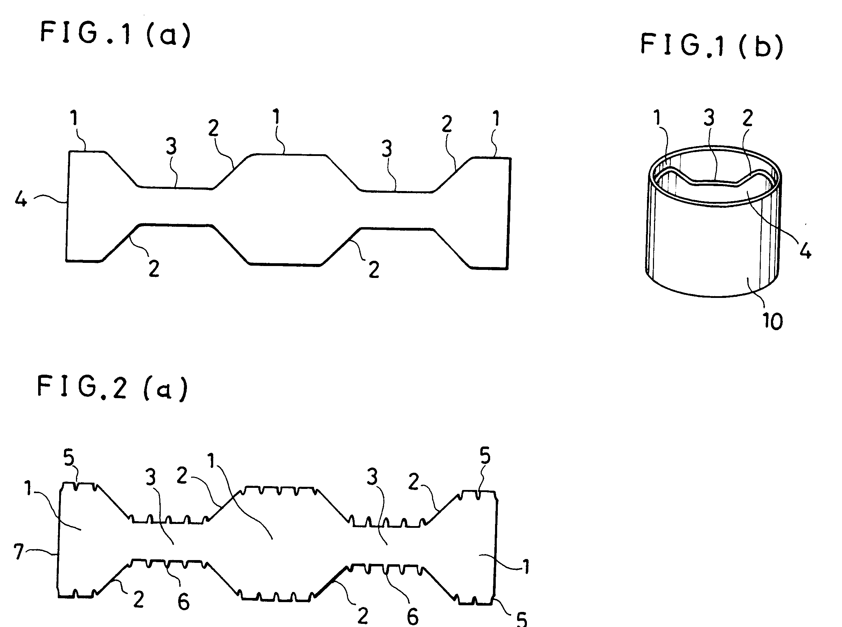

In FIG.1(a), a typical developed configuration of a strip made of rubber magnet 4 used in a motor built in accordance with the present invention is shown. The rubber magnet strip 4 has polarised regions 1 with maximum width, non-polarised regions 3 with minimum width and regions 2 with continuously varying width which connect said polarised regions 1 to the non-polarised regions 3. FIG.1(b) is a perspective view illustrating a manner of inserting the rubber magnet strip 4 which is rounded into a motor housing 10.

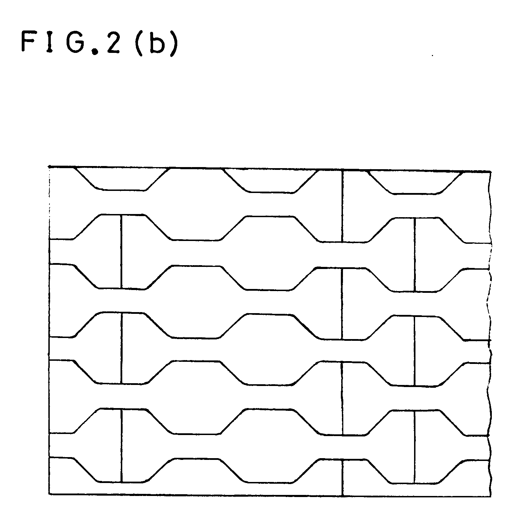

In FIG.2(a), a developed configuration of another example of the rubber magnet strip 7 to be used in the motor of the present invention is shown. The rubber magnet strip 7 also has a similar planar configuration including polarised regions 1 with maximum width, the non-polarised regions 3 with minimum width and the bridging regions 2 with continuously varying width. In the exemplified rubber magnet strip, a plurality of indents 5 are provided along the periphery of the polarised regions 1 with certain constant intervals, in order to improve the cogging characteristics, while a plurality of protrusions 6 are provided along the periphery of the non-polarised regions 3 with certain given intervals, in order to facilitate the inserting operation. By providing the indents 5 and protrusion 6, the performance of the finished miniature motor is made by far excellent.

Both embodiments of the rubber magnet strips of FIG.1(a) and FIG.2(a) have shapes suitable for efficient cutting (with very little cutting waste) when a plurality of them are cut by arranging them, in a manner that the maximum width parts and minimum width parts are put side by side, as shown in FIG.2(b).

TABLE in the next page summarizes the results of the experiments performed for confirming the superiority of the characteristics of the electric motors built in accordance with the present invention compared to that of the conventional motor.

In the experiment, a miniature motor built with the conventional rectangular strip 8 made of rubber magnet as shown by FIG.4 (b) is used and the results are indicated in TABLE as Comparative Example. One with the rubber magnet strip including polarised regions of maximum width, bridging regions of continuously varying width and non-polarised regions of minimum width as shown by FIG.1 (a) is used and the results are indicated in TABLE as Working Example 1) while those of the other provided with the indents 5 and protrusions 6 as shown by FIG.2 are indicated in TABLE as Working Example 2).

These rubber magnet strips are assembled in miniature D.C. motors of:

Outer diameter; 30 mm, height; 25 mm, and

Rated output; 0.1 W.

Tests are performed under the experimental conditions of:

4.2 V D.C., 25 mA, 2400 rpm., for 2000 hrs..

## TABLE

|  | Cogging Characteristics | Wow/ Fluttering | Overall Evaluation |
|---|---|---|---|
| Comparative Example | Acceptable | 0.1 | Good |
| Working Example 1) | Good | 0.33 | Excellent |
| Working Example 2) | Excellent | 0.25 | Excellent |

As summarized in the above TABLE, the results of the comparative experiment reveal that the miniature motors build in accordance with the present invention are found to have the following advantages.

1) A remarkable improvement in the cogging characteristics.

2) An easy assembling process and the resultant remarkable improvement in the refuse ratio.

3) A space-saving miniature size of the finished motor of so-called "light weight and thin, short and miniature in size" is realized.

4) The rubber magnet strips are shaped so that efficient cutting with very little cutting wastes are made when a plurality of them are cut by arranging them in a manner that the maximum width parts and minimum width parts are put side by sides.

## Claims

1. A miniature electric motor whose stator is structured with a strip (4) made of rubber magnet; said strip (4) comprises polarised regions (1) and non-polarised regions (3) and characterized in that said strip has varying width, the widths of said polarised regions (1) being larger than those of non-polarised regions (3).

2. The miniature motor as claimed in claim 1, wherein said strip (4) comprises polarised regions (1) of the maximum width, non-polarised regions (3) of the minimum width, and regions (2) of continuously and/or stepwise varying width for bridging said polarised regions (1) with said non-polarised regions (3).

3. The miniature motor as claimed in claim 1 or 2, wherein said polarised regions (1) include a plurality of discrete narrowed width zones (5), and said non-polarised regions (3) include a plurality of discrete widened width zones (7).

4. The miniature motor as claimed in claim 2, wherein said narrowed width zones are indents (5) provided along the periphery of the polarised regions (1) of the strip (4).

5. The miniature motor as claimd in claim 2, wherein said widened width zones are protrusions (6) provided along the periphery of the non-polarised regions (3) of the strip (4).

**Patentansprüche**

1. Ein elektrischer Miniaturmotor beziehungsweise Motor im Kleinformat, dessen Stator mit einem Streifen (4) aus Gummimagnet beziehungsweise gummiartigem Magnet strukturiert ist, wobei der Streifen (4) polarisierte Bereiche (1) und nicht-polarisierte Bereiche (3) aufweist, dadurch gekennzeichnet, daß der Streifen eine variierende Breite aufweist, wobei die Breiten der polarisierten Bereiche (1) größer sind als diejenigen der nicht-polarisierten Bereiche (3).

2. Der Miniaturmotor beziehungsweise Motor im Kleinformat nach Anspruch 1, wobei der Streifen (4) polarisierte Bereiche (1) der maximalen Breite, nicht-polarisierte Bereiche (3) der minimalen Breite und Bereiche (2) von kontinuierlich und/oder schrittweise variierender Breite zum Verbinden der polarisierten Bereiche (1) mit den nicht-polarisierten Bereichen (3) aufweist.

3. Der Miniaturmotor beziehungsweise Motor im Kleinformat nach Anspruch 1 oder 2, wobei die polarisierten Bereiche (1) eine Vielzahl von Zonen (5) mit diskret verringerter Breite aufweisen und die nicht-polarisierten Bereiche (3) eine Vielzahl von Zonen (7) mit diskret vergrößerter Breite aufweisen.

4. Der Miniaturmotor beziehungsweise Motor im Kleinformat nach Anspruch 2, wobei die Zonen mit verringerter Breite Einschnitte bzw. Zahneinschnitte (5) sind, die entlang des Umfangs der polarisierten Bereiche (1) des Streifens (4) vorgesehen sind.

5. Der Miniaturmotor beziehungsweise Motor im Kleinformat nach Anspruch 2, wobei die Zonen mit vergrößerter Breite Vorsprünge (6) sind, die entlang des Umfangs der nicht-polarisierten Bereiche (3) des Streifens (4) vorgesehen sind.

**Revendications**

1. Moteur électrique miniature dont le stator comporte une bande (4) d'aimant en caoutchouc; ladite bande (4) comprend des zones polarisées (1) et des zones non polarisées (3) et caractérisée en ce que ladite bande a une largeur variable, les largeurs desdites zones polarisées (1) étant plus grandes que celles des zones non polarisés (3).

2. Moteur électrique miniature selon la revendication 1, dans lequel ladite bande (4) comprend des zones polarisées (1) de largeur maximum, des zones non polarisées (3) de largeur minimum, et des zones (2) ayant une largeur variant de façon continue et/ou par étapes pour relier lesdites zones polarisées (1) auxdites zones non polarisées (3).

3. Moteur miniature selon la revendication 1 ou 2, dans lequel lesdites zones polarisées (1) comprennent une multitude de zones finies de largeur rétrécie (5), et lesdites zones non polarisées (3) comportent une multitude de zones finies de largeur élargie (7).

4. Moteur miniature selon la revendication 2, dans lequel lesdites zones à largeur rétrécie sont des encoches (5) ménagées sur la périphérie des zones polarisées (1) de la bande (4).

5. Moteur miniature selon la revendication 2, dans lequel lesdites zones à largeur élargie sont des saillies (6) fournies sur la périphérie des zones non polarisées (3) de la bande (4).

FIG.1(a)

FIG.1(b)

FIG.2(a)

F I G. 2 (b)

# FIG.3(Prior Art)

8

# FIG.4(a)(Prior Art)

9

10

# FIG.4(b)(Prior Art)

8

8

10

8